# EUROPEAN PATENT APPLICATION

(11) **EP 2 677 404 A1**
(43) Date of publication of application: **25.12.2013**
(21) Application number: 11858810.2
(22) Date of filing: 12.12.2011
(51) Int. Cl.: G06F 3/041, G06F 3/044, H04M 1/00, H04M 1/247, H04M 1/725

(54) **TOUCH INPUT DEVICE, ELECTRONIC APPARATUS, AND INPUT METHOD**

(30) Priority: 16.02.2011 JP 2011030968
(71) Applicant: NEC CASIO Mobile Communications, Ltd., Kawasaki-shi Kanagawa 211-8666 (JP)
(72) Inventor: MURAMATSU, Eiji, Kawasaki-shi, Kanagawa 211-8666 (JP)
(74) Representative: Vossius & Partner
(86) International application number: PCT/JP2011/078666
(87) International publication number: WO 2012/111227

(57) **Abstract**

There is provided a touch input device which is capable of changing inputs based on the intuitive selection of a finger. Controller 12 detects a plurality of noncontact positions which represent respective positions of a plurality of detectable objects that have moved close to operation surface 11 within a predetermined distance, and a contact position which represents the position on operation surface 11 of one of the detectable objects which has contacted operation surface 11, and outputs detection signals based respectively on the noncontact positions and the contact position.

## Description

### Field of the Invention:

The present invention relates to a touch input device, an electronic device, and an input method which are capable of entering inputs by touching an operation surface.

### Background art:

Some electronic devices such as cellphone terminals incorporate a touch input device such as a touch panel. The user of such an electronic device can enter inputs by touching the operation surface of the touch input device with a finger.

One touch input device has an entered input made variable by an operating action that has been taken, such as a contact position where the user contacts the operation surface, the relative positional relationship between a contact position where the user has initially contacted the operation surface and a contact position where the user contacts the operation surface the next time, a contact time at which where the user has contacted the operation surface, or the distance that a contact position where the user has contacted the operation surface has moved.

However, simply when the user has changed fingers with which to touch the operation surface, the above touch input device is unable to recognize that an operating action has changed, and hence an entered input does not change. Therefore, the touch input device is problematic in that the range of actions that can be selected by the user is small.

Patent document 1 discloses an information input device which identifies a finger of the user as a finger that has touched an operation surface based on the fingerprint, position, shape, or size of the finger, and executes a command which has been registered in association with the identified finger.

### Prior technical documents:

### Patent documents:

Patent document 1: JP2008-123032

### Summary of the invention:

### Problems to be solved by the invention:

Generally, the user of a pointing device such as a mouse enters an input by placing a cursor on an icon on the screen and pressing a button on the pointing device. If the pointing device has a plurality of buttons, then the user can change inputs by selecting one of the buttons to be pressed. Regardless of which finger is used to press the button, inputs are changed depending on which button was pressed. Therefore, the user can intuitively select an input without recognizing which finger is to press the button.

With the information input device disclosed in Patent document 1, since inputs are changed depending on the finger that has touched the operation surface, the user has to recognize a finger that is to touch the operation surface, and finds it difficult to change inputs intuitively.

It is an object of the present invention to provide a touch input device, an electronic device, and an input method which are capable of changing inputs based on the intuitive selection of a finger.

### Means for solving the problems:

A touch input device according to the present invention includes an operation surface and a controller for detecting a plurality of noncontact positions which represent respective positions of a plurality of detectable objects that have moved close to the operation surface within a predetermined distance, and a contact position which represents the position on the operation surface of one of the detectable objects which has contacted the operation surface, and outputting detection signals depending respectively on the noncontact positions and the contact position.

An electronic device according to the present invention includes the touch input device described above and an information processor for performing an information processing sequence depending on a detection signal output from the touch input device.

According to the present invention, there is also provided an input method for being carried by a touch input device having an operation surface, comprising detecting a plurality of noncontact positions which represent respective positions of a plurality of detectable objects that have moved close to the operation surface within a predetermined distance, detecting a contact position which represents the position on the operation surface of one of the detectable objects which has contacted the operation surface, and outputting detection signals depending respectively on the noncontact positions and the contact position.

According to the present invention, the range of actions that can be selected by the user can be increased by an easy process.

### Brief description of the drawings:

Fig. 1 is a front elevational view of a cellphone terminal according to an exemplary embodiment of the present invention;
Fig. 2 is a block diagram showing a functional configuration of the cellphone terminal according to the exemplary embodiment;
Fig. 3 is a flowchart of an operation sequence of the cellphone terminal according to the exemplary embodiment; and
Fig. 4 is a view illustrating an example of an action taken by the user of the cellphone terminal according to the exemplary embodiment.

### Mode for carrying out the invention:

An exemplary embodiment of the present invention will hereinafter be described below with reference to the drawings. In the description which follows, those parts which have identical functions are given identical characters, and will not be described below.

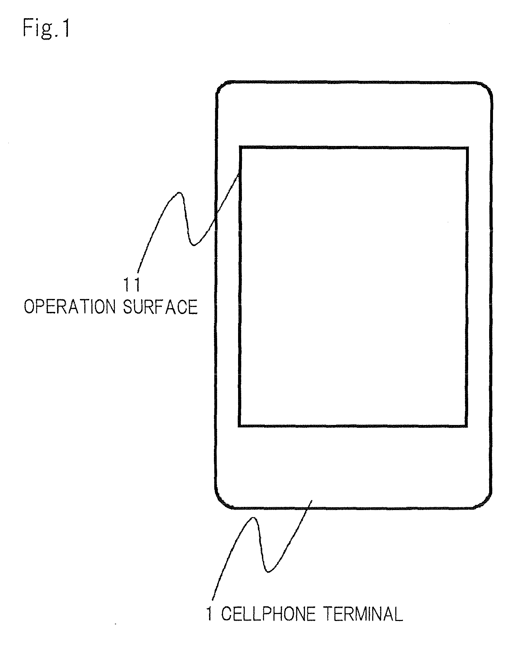

Fig. 1 is a front elevational view of a cellphone terminal according to an exemplary embodiment of the present invention. As shown in Fig. 1, cellphone terminal 1 has operation surface 11 for the user to take actions to operate cellphone terminal 1. The user moves a plurality of detectable objects close to operation surface 11, and then brings either one of the detectable objects into contact with operation surface 11, thereby entering an input into cellphone terminal 1. The detectable objects may conveniently be fingers of the user, but may be styluses.

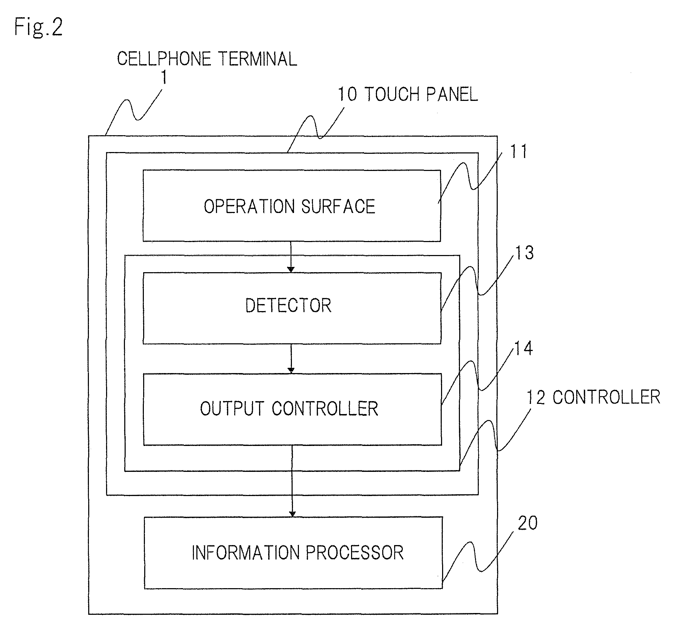

Fig. 2 is a block diagram showing a functional configuration of cellphone terminal 1. As shown in Fig. 2, cellphone terminal 1 has touch panel 10 and information processor 20.

Touch panel 10 is a touch input device including operation surface 11 and controller 11 for detecting actions on operation surface 11.

Controller 12 detects a plurality of noncontact positions which represent respective positions of the detectable objects that have moved closely to operation surface 11 within a predetermined distance, and a contact position which represents the position on operation surface 11 of one of the detectable objects which has contacted operation surface 11. Controller 12 outputs detection signals, depending on the detected noncontact positions and contact position, to information processor 20. The noncontact positions may be three-dimensional positions which include at least projected positions of the detectable objects on operation surface 11, with distances from operation surface 11 being added to the projected positions.

Specifically, controller 12 includes detector 13 and output controller 14.

Detector 13 outputs action signals, that represent the positions of the detectable objects that have moved closely to operation surface 11 within the predetermined distance and the position of the detectable object which has contacted operation surface 11, to output controller 14.

When output controller 14 receives the action signals, output controller 14 detects the noncontact positions and the contact position based on the action signals, and outputs a detection signal depending on the noncontact positions and the contact position to information processor 20.

If the touch panel 10 is an electrostatic capacitance touch panel, for example, then detector 13 serves as an electrostatic capacitance detector which detects a change in the electrostatic capacitance of operation surface 11 for each of the positions on operation surface 11, and outputs an action signal representing the changes and the positions to output controller 14.

When an electric conductor such as a finger of the user approaches operation surface 11 with a certain distance therefrom, the electrostatic capacitance of operation surface 11 changes because of the approaching electric conductor. As the electric conductor moves closer to operation surface 11, the change in the electrostatic capacitance of operation surface 11 becomes greater. When the electric conductor is brought into contact with operation surface 11, the change in the electrostatic capacitance of operation surface 11 becomes the greatest. The certain distance referred to above is the distance at which detector 13 is able to detect a change caused in the electrostatic capacitance of operation surface 11 by the detectable object.

Output controller 14 detects a position where the change in the electrostatic capacitance represented by an action signal falls in a given range, as a noncontact position, and also detects a position where the change in the electrostatic capacitance represented by an action signal goes beyond the given range, as a contact position.

Information processor 20 receives the detection signal from controller 12, and performs an information processing sequence depending on the detection signal.

Operation of cellphone 1 will be described below.

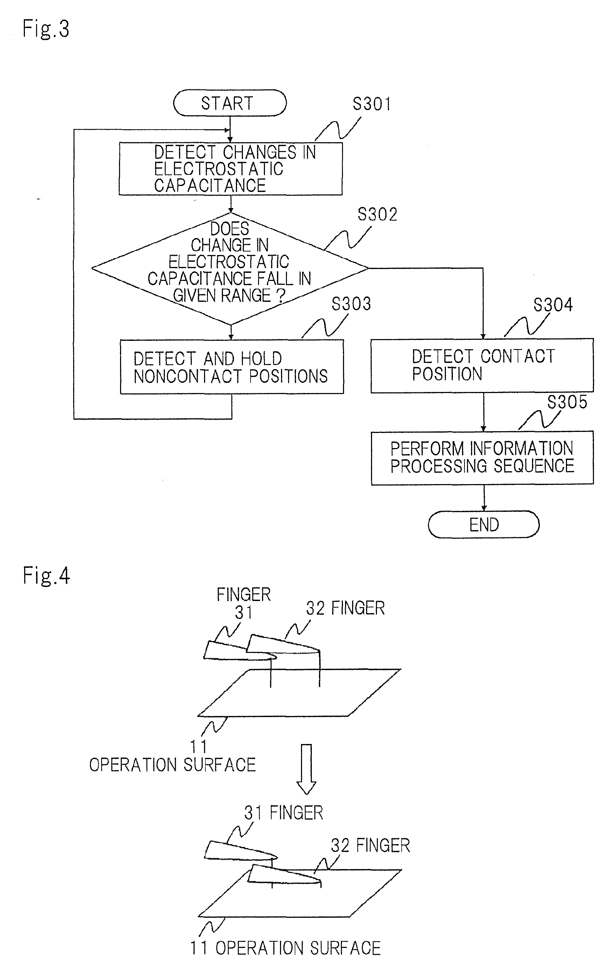

Fig. 3 is a flowchart of an operation sequence of cellphone terminal 1. As shown in Fig. 4, it is assumed that the user moves two fingers 31, 32 of its own as detectable objects closely to operation surface 11, and then brings finger 32 into contact with operation surface 11. It is also assumed that touch panel 10 is an electrostatic capacitance touch panel.

When fingers 31, 32 approach operation surface 11 within a given distance, cellphone terminal 1 starts to operate as follows:

First, detector 13 detects changes caused in the electrostatic capacitance by respective fingers 31, 32, and outputs action signals representing positions on operation surface 11 where the changes in the electrostatic capacitance have occurred to output controller 14 (step 301).

When output controller 14 receives the action signals, output controller 14 judges whether or not the changes in the electrostatic capacitance represented by the action signals fall within a given range(step S302).

Since fingers 31, 32 does not contact operation surface 11 at this time, both of the changes in the electrostatic capacitance fall within the given range. Therefore, output controller 14 detects the two positions represented by the action signals as noncontact positions, and holds the noncontact positions (step S303).

Thereafter, steps S301 through S303 are repeated until finger 32 contacts operation surface 11. During this time, output controller 14 holds the latest noncontact positions in step S303.

When finger 32 is brought into contact with operation surface 11, output controller 14 decides that one of the changes in the electrostatic capacitance has exceeded the given range in step S302. Output controller 14 detects the position where the change in the electrostatic capacitance has exceeded the given range, as a contact position (step S304).

Output controller 14 outputs a detection signal, based on the contact position detected in step S304 and the noncontact positions held in step S303, to information processor 20. When information processor 20 receives the detection signal, it performs an information processing sequence depending on the detection signal (step S305).

More specifically, based on the contact position and the noncontact positions, output controller 14 determines the relative positional relationship between a contact object which is the finger that has contacted operation surface 11 and a noncontact object which is another finger different from the contact object, and outputs a detection signal based on the determined relative positional relationship.

For example, output controller 14 regards a finger in the contact position as a contact object, regards a finger in one of the two noncontact positions, which is different from the contact position or remoter from the contact position, as a noncontact object, determines information representing whether the contact object is on the right or left side of the noncontact object as the relative positional relationship of the noncontact object to the contact object, and outputs a detection signal based on the relative positional relationship. The user is now able to control cellphone terminal 1 to perform one of different information processing sequences simply by selecting a finger to contact operation surface 11, as if making a right click or a left click on a mouse.

In the above operation sequence, two fingers are used as detectable objects. However, three or more fingers may be used as detectable objects.

According to the present exemplary embodiment, as described above, becuses detection signals based on a plurality of noncontact signals and a contact position are output, the user can change actions on operation surface 11 simply by moving a plurality of fingers close to operation surface 11 and by selecting one of the fingers to contact operation surface 11. Therefore, the user can change inputs by the intuitive selection of a finger.

Inasmuch as the user can change actions simply by changing fingers that are to be brought into contact with operation surface 11, as if selecting a right click or a left click on a mouse, the user can change inputs as if using a general pointing device.

The foregoing details of the exemplary embodiment are illustrated by way of example only. The present invention is not limited to those illustrated details.

For example, a single electrostatic capacitance detector is used to detect both noncontact positions and a contact position in the illustrated exemplary embodiment. However, a proximity sensor using an infrared radiation may be used as a means for detecting noncontact positions separately from a means for detecting a contact position. The touch input device may be incorporated in electronic devices (e.g., game machines) other than cellphone terminals.

This application is based upon and claims the benefit of priority from Japanese Patent Application No. 2011-030968 filed on February 16, 2011, the entire disclosure of which is incorporated herein by reference.

### Description of reference numerals:

- 1: cellphone terminal
- 11: operation surface
- 12: controller
- 13: detector
- 14: output controller
- 20: information processor

## Claims

1. A touch input device comprising:
an operation surface; and
a controller for detecting a plurality of noncontact positions which represent respective positions of a plurality of detectable objects that have moved close to said operation surface within a predetermined distance, and a contact position which represents the position on said operation surface of one of said detectable objects which has contacted said operation surface, and outputting detection signals based respectively on said noncontact positions and said contact position.

2. The touch input device according to claim 1, wherein said controller determines the relative positional relationship between a contact object which is the detectable object that has contacted said operation surface and a noncontact object which is another detectable object different from said contact object, based on said noncontact positions and said contact position, and outputs a detection signal depending on the determined relative positional relationship.

3. The touch input device according to claim 3, wherein said controller detects two of said noncontact positions and determines information representing whether said contact object is on the right or left side of said noncontact object as said relative positional relationship.

4. The touch input device according to claim 1 or 2, wherein said controller comprises:
an electrostatic capacitance detector for detecting changes in the electrostatic capacitance of said operation surface at respective positions thereon; and
an output controller for detecting positions where changes in the electrostatic capacitance fall within a given range, as said noncontact positions, detecting a position where a change in the electrostatic capacitance goes beyond said given range, as said contact position, and outputting a detection signal depending on said noncontact positions and said contact position.

5. An electronic device comprising:
a touch input device according to any one of claims 1 through 4; and
an information processor for performing an information processing sequence based on a detection signal output from said touch input device.

6. An input method for being carried by a touch input device having an operation surface, comprising:
detecting a plurality of noncontact positions which represent respective positions of a plurality of detectable objects that have moved close to said operation surface within a predetermined distance;
detecting a contact position which represents the position on said operation surface of one of said detectable objects which has contacted said operation surface; and
outputting detection signals based respectively on said noncontact positions and said contact position.
